# NEUE EUROPÄISCHE PATENTSCHRIFT

(11) **EP 1 084 884 B2**
(45) Veröffentlichungstag und Bekanntmachung des Hinweises auf die Entscheidung über den Einspruch: **26.12.2007**
(45) Hinweis auf die Patenterteilung: 17.03.2004
(21) Anmeldenummer: 00119151.9
(22) Anmeldetag: 05.09.2000
(51) Int. Cl.: B60J 7/20

(54) **Cabriolet-Fahrzeug**
Convertible vehicle
Véhicule convertible

(30) Priorität: 13.09.1999 DE 29916004 U
(43) Veröffentlichungstag der Anmeldung: 21.03.2001
(73) Patentinhaber: Wilhelm Karmann GmbH, 49084 Osnabrück (DE)
(72) Erfinder: Bunsmann, Winfried, 49143 Bissendorf (DE); Exner, Markus, 49191 Belm (DE); Russke, Klaus, 49143 Bissendorf (DE)
(74) Vertreter: Busse & Busse Patentanwälte

(56) Entgegenhaltungen:
- EP-A- 0 638 453
- DE-A- 3 623 515
- DE-C- 948 121
- DE-C- 19 516 876
- DE-C- 19 516 877
- DE-C- 19 525 587
- US-A- 2 768 857

## Beschreibung

Die Erfindung betrifft ein Cabriolet-Fahrzeug mit einem im rückwärtigen Fahrzeugbereich unterhalb eines Deckelteils ablegbaren Dach.

Es ist üblich geworden, daß Cabriolet-Fahrzeuge ein festes Deckelteil aufweisen, das ein im Heckbereich des Fahrzeugs abgelegtes Dach, wobei das Dach flexibel ausgebildet sein oder zumindest bereichsweise feste Dachteile umfassen kann, in geöffnetem Zustand überdeckt. Die früher häufig anzutreffende Lösung, über dem abgelegten Dach eine Persenring zu spannen, findet heute nur noch wenig Verwendung. Ein Deckelteil der genannten Art kann gegen die Fahrtrichtung in einem spitzen Winkel geöffnet werden und somit eine Durchtrittsöffnung für das Dach freigeben. Die Durchtrittsöffnung ist dadurch eingeschränkt, daß das Deckelteil im geschlossenen Zustand eine karosserieseitige Abstützung erfahren muß, in der Regel auf einem umlaufenden Rand, der den Verdeckaufnahmeraum oberseitig begrenzt, aufliegt. Dadurch ergibt sich eine gegenüber den Ausmaßen des Deckelteils verkleinerte Durchtrittsöffnung für das Dach, so daß das Deckelteil eine erhebliche, teilweise den Fahrzeugrand überkragende Breitenausdehnung aufweisen muß, um eine hinreichend große Durchtrittsöffnung gewährleisten zu können. Dadurch wird das Deckelteil recht ausladend und schwer, was eine hohe Antriebsleistung zu seiner Bewegung erfordert und zudem auch optisch unvorteilhaft ist.

Ein gattungsgemäßes Cabriolet- Fahrzeug ist aus Dokument DE 195 16 877 C bekannt.

Der Erfindung liegt das Problem zugrunde, hier eine Verbesserung zu schaffen.

Die Erfindung löst dieses Problem mit den Merkmalen des Anspruchs 1. Hinsichtlich weiterer vorteilhafter Ausgestaltungen und Weiterbildungen der Erfindung wird auf die Ansprüche 2 bis 3 verwiesen.

Mit den erfindungsgemäß vorgesehenen Lagerböcken, auf denen das Deckelteil in geschlossenem Zustand aufliegt und die zur Vergrößerung der Durchtrittsöffnung für das Dach in eine außerhalb dieser Öffnung liegende Stellung verlagerbar sind, steht die gesamte Breite des Deckelteils auch als Durchtrittsbreite der Karosserieöffnung, die von dem Deckelteil abdeckbar ist, zur Verfügung. Nach Eintritt der breitesten Teile des Dachs können die Lagerböcke wieder zurückschwenken, um das sich schließende Deckelteil abzustützen.

Die Lagerböcke sind seitlichen Karosseriebereichen zugeordnet und jeweils seitlich verlagerbar. So können sie in einen ohnehin nur schwer nutzbaren Raum oberhalb der Radkästen angeordnet werden, so daß die Lagerböcke selbst keinen nennenswerten Raumbedarf haben.

In besonders vorteilhafter Ausgestaltung werden derartige Lagerböcke bei einem Deckelteil zur Anwendung gebracht, das sowohl mit seinem vorderen Endbereich geöffnet werden kann zur Freigabe einer Durchtrittsöffnung für das Dach als auch mit seinem hinteren Endbereich zur Freigabe einer Kofferraumöffnung. Derartige Deckelteile nehmen häufig einen wesentlichen Teil des Heckbereichs eines Fahrzeugs ein und sind rückseitig in einem Schloß-Scharnierbereich gelagert, so daß auch dort die Abstützungsproblematik sich im vorderen Endbereich des Deckelteils ergibt. Dort ist auch die maximale Eintrittsbreite erforderlich, da die Gestängeteile des Daches bzw. bei einem Festdach dessen Ausmaße im wesentlichen die gesamte Fahrzeugbreite oberhalb einer Fensterbrüstungslinie ausfüllen.

Weitere Vorteile und Merkmale der Erfindung ergeben sich aus einem nachfolgend beschriebenen und in der Zeichnung dargestellten Ausführungsbeispiel des Gegenstandes der Erfindung.

In der Zeichnung zeigt:
- Fig. 1: eine schematisierte Ansicht von schräg hinten auf ein Cabriolet-Fahrzeug mit seitlichen Lagerböcken zur Abstützung des aufliegenden Deckelteils,
- Fig. 2: einen Schnitt entlang der Ebene II-II in Fig. 1,
- Fig. 3: den Lagerbock nach Fig. 2 in eingeschwenkter Stellung bei eingelegtem Dach.

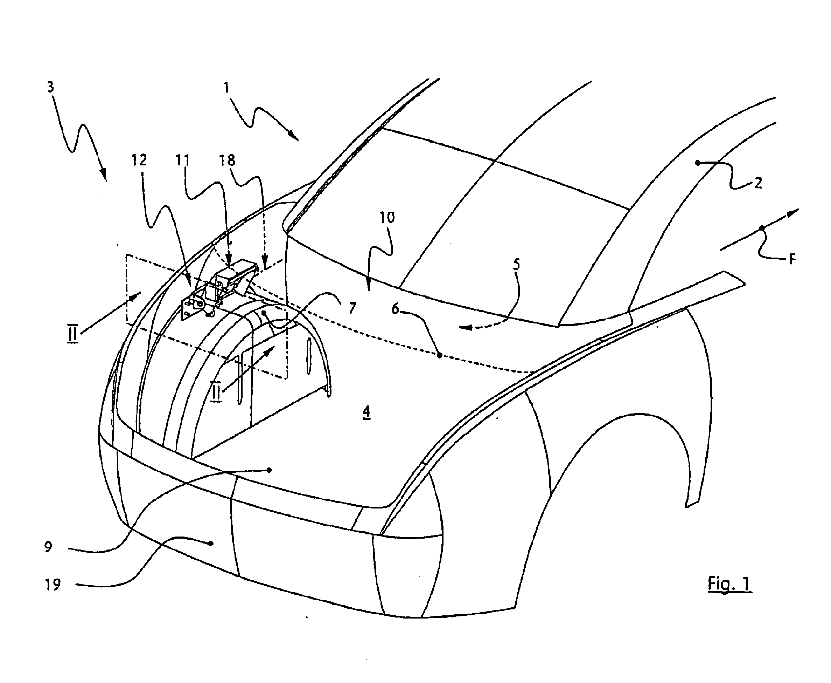

Ein erfindungsgemäßes Cabriolet-Fahrzeug 1 gemäß dem Ausführungsbeispiel weist ein bewegliches und im Heckbereich des Fahrzeugs in einem Verdeckaufnahmeraum 5 ablegbares Dach 2 auf. Im abgelegten, also geöffneten Zustand ist das Dach 2 von einem Deckelteil 4 übergriffen, wodurch der Dachaufnahmeraum 5 oberseitig abgeschlossen wird. Das Deckelteil 4 erstreckt sich im Ausführungsbeispiel mit seinem hinteren Endbereich 9 im wesentlichen bis zur hinteren Stoßstange 16 und kann in zur Dachaufnahme gegensinniger Verschwenkrichtung auch zur Freigabe einer Beladeöffnung für den Kofferraum geöffnet werden. Derartige Deckelteile 4 finden sich insbesondere bei Fahrzeugen, in denen das Dach 2 aus Festteilen besteht. In Abwandlung hierzu kann das Deckelteil 4 auch an der in Fig. 1 gestrichelt eingezeichneten Linie 6 enden und dann nur mit seinem vorderen Endbereich 10 gegen die Fahrtrichtung F spitzwinklig aufgeschwenkt werden, um das Dach aufzunehmen. Eine Kofferraumklappe wäre dann separat vorhanden. Besonders vorteilhaft werden die Lagerböcke 11 jedoch bei Verwendung eines Festdachs und einem in zwei Bewegungsrichtungen aufschwenkbaren Deckelteil 4 eingesetzt. Gemäß dem Ausführungsbeispiel ist dabei ein Mehrgelenk 20 vorgesehen, das die Öffnung des Deckelteils 4 im Sinne einer Freigabe der Aufnahmeöffnung für Gepäck, bei der das Deckelteil 4 also nach Art einer Kofferraumklappe einen stumpfen Winkel mit der Fahrtrichtung F einschließt, bewirkt. Das Mehrgelenk 20 liegt dabei in geschlossener Stellung auf den Lagerböcken 11 im Bereich der Auflagefläche 14 auf, so daß diese eine Abstützung für das Mehrgelenk 20 sowohl in geschlossener Stellung des Deckelteils 4 als auch bei Freigabe der Aufnahmeöffnung für Gepäck bewirken. Lediglich bei Aufschwenken des Deckelteils 4 im Sinne der Freigabe der Durchtrittsöffnung für das Dach 2 wird das Mehrgelenk 20 vollständig mit dem Deckelteil 4 mit aufgeschwenkt. Entsprechend können dann die Lagerböcke 11 eingeschwenkt werden, da sie dann keine Abstützungsfunktion ausüben müssen und die maximale Durchtrittsbreite für das Dach freigeben können.

Seitlich und oberhalb der Radkästen 7 sind symmetrisch zu einer vertikalen Fahrzeuglängsmittelebene die Lagerböcke 11 angeordnet, die gegenüber der Fahrzeugkarosserie festgelegt sind und in den Durchtrittsbereich für das Dach einschwenken können. Anstelle der Schwenkbewegung kommt auch eine andere Verlagerung, etwa eine Parallelverlagerung, in Betracht.

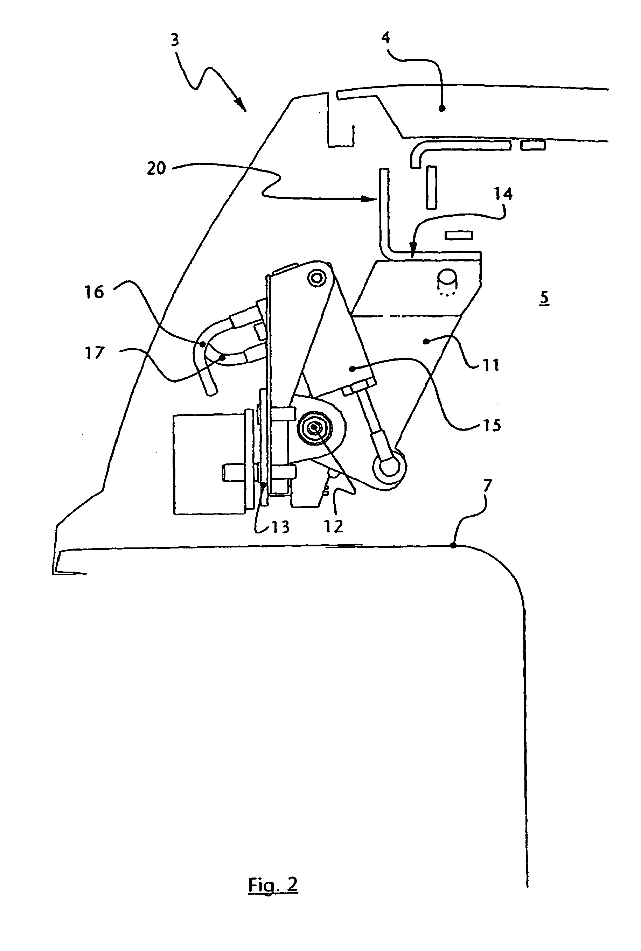

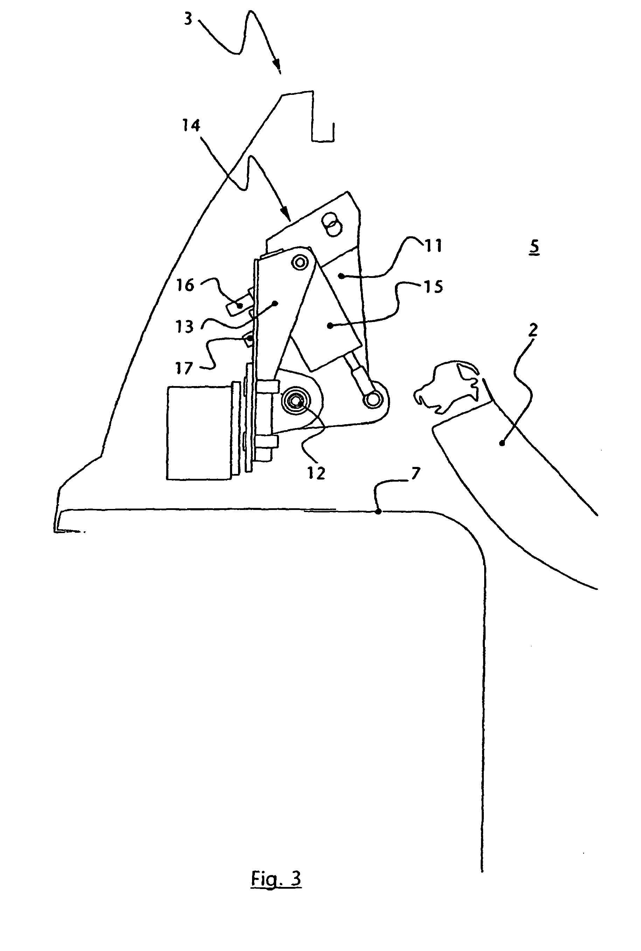

Die Lagerböcke 11 sind an Schwenklagern 12 gehalten, die diese von einer Halterung 13, die karosserieseitig festgelegt ist, schwenkbar trennen. Um die Verschwenkung der Lagerböcke zwischen der ausgeschwenkten Stellung (Fig. 1, Fig. 2), in der sie eine Auflagefläche 14 zur Abstützung des Deckelteils 4 ausbilden, und der eingeschwenkten Stellung nach Fig. 3 zu ermöglichen, ist jeweils ein Hydraulikzylinder 15 vorgesehen, der über Hydraulikleitungen 16,17 ansteuerbar ist. Vorteilhaft ist die Ansteuerung des Hydraulikzylinders 15 mit Druckmittel mit dem Bewegungszustand des Deckelteils 4 gekoppelt, so daß weitere Steuerungsmechanismen entbehrlich sind. Bei Öffnung des Deckelteils 4 kann ein automatisches Einschwenken der Lagerböcke erfolgen, um damit die gesamte Durchtrittsbreite für das Dach 2 freizugeben. Bei Absenken des Deckelteils aus seiner maximalen Öffnungsstellung kann sowohl bei geöffnetem als auch bei geschlossenem und vollständig eingelegtem Dach das Ausschwenken der Lagerböcke erfolgen, so daß in jedem Fall die Abstützung bei geschlossenem Deckelteil 4 gewährleistet ist. Anstelle der Hydraulikzylinder 15 kommen auch andere Antriebsmechanismen, etwa Elektromotore, in Frage.

Im Ausführungsbeispiel sind die Lagerböcke 11 um Schwenkachsen 18 herum schwenkbar, wobei die Schwenkachsen 18 parallel zur Fahrzeuglängsachse verlaufen. Auch eine hierzu angewinkelte Stellung der Schwenkachsen 18 ist möglich, insbesondere wenn das Fahrzeug nach hinten hin eine deutliche Verjüngung zeigt.

Das Deckelteil eines erfindungsgemäßen Cabriolet-Fahrzeugs kann beispielsweise aus Kunststoff, bei vollständiger Hecküberdeckung häufig auch aus einem metallischen Blech bestehen. Insbesondere bietet sich hierfür ein metallischer Schaumwerkstoff an, beispielsweise ein Aluminiumschaumbauteil.

## Patentansprüche

1. Cabriolet-Fahrzeug (1) mit einem im rückwärtigen Fahrzeugbereich (3) unterhalb eines Deckelteils (4) ablegbaren Dach (2), wobei das Deckelteil (4) zur Freigabe einer seinem vorderen Endbereich (10) benachbarten Durchtrittsöffnung für das Dach (2) auf und zu beweglich ist, wobei das Deckelteil (4) in geschlossener Stellung in seinem vorderen Bereich (10) auf mit der Fahrzeugkarosserie verbundenen Lagerböcken (11) gehalten ist, die Lagerböcke (11) zur Vergrößerung der Durchtrittsöffnung des Daches (2) in geöffneter Stellung des Deckelteils (4) verlagerbar sind, die Lagerböcke (11) seitlichen Karosseriebereichen zugeordnet und jeweils seitlich verlagerbar sind.

2. Cabriolet-Fahrzeug nach Ansprüch 1, **dadurch gekennzeichnet, daß** die Lagerböcke (11) an sich parallel zur Fahrzeuglängsachse (18) erstreckenden Schwenkachsen (12) schwenkbeweglich gehalten sind.

3. Cabriolet-Fahrzeug nach einem der Ansprüche 1 oder 2, **dadurch gekennzeichnet, daß** das Deckelteil (4) in weiterer Bewegungsmöglichkeit zur Freigabe einer seinem hinteren Endbereich (9) benachbarten Aufnahmeöffnung für Gepäck auf und zu beweglich ist.

4. Cabriolet-Fahrzeug nach Anspruch 3, **dadurch gekennzeichnet, daß** die Lagerböcke (11) in geschlossenem Zustand des Deckelteils (4) eine Abstützung für ein Mehrgelenk (20) ausbilden, das die Aufschwenkung des Deckelteils (4) zur Freigabe der seinem hinteren Endbereich (9) benachbarten Aufnahmeöffnung für Gepäck bewirkt.

## Claims

1. Convertible vehicle (1) having a roof (2) able to stowed in the rear part (3) of the vehicle underneath a cover member (4), the cover member (4) being movable open and closed to uncover an opening for the roof (2) to pass through which is adjacent its front end-section (10), the cover member (4) being held in its front section (10), in the closed position, on support steps (11) connected to the bodywork of the vehicle, the support steps (11) being displaceable to enlarge the opening for the roof (2) to pass through when the cover member (4) is in the open position, the support steps (11) being associated with lateral regions of the bodywork and being each displaceable sideways.

2. Convertible vehicle according to claim 1, **characterised in that** the support steps (11) are held, in such a way as to be movable by pivoting, on pivot shafts (12) extending parallel to the longitudinal axis (18) of the vehicle.

3. Convertible vehicle according to either of claims 1 and 2, **characterised in that**, in another possible movement, the cover member (4) is movable open and closed to uncover a receiving opening for luggage which is adjacent its rear end-section (9).

4. Convertible vehicle according to claim 3, **characterised in that**, when the cover member (4) is in the closed state, the support steps (11) form a support for a multi-piece linkage (20) which causes the cover member (4) to pivot up to uncover the receiving opening for luggage which is adjacent its rear end-section (9).

## Revendications

1. Véhicule convertible (1) comprenant un toit (2) qui peut être déposé dans la zone arrière (5) du véhicule sous une partie de couvercle (4) qui, pour libérer une ouverture de passage du toit (2) située dans sa zone d'extrémité avant (10) est mobile dans le sens d'ouverture et dans le sens de fermeture, cette partie de couvercle (4), en position de fermeture, étant montée, par sa zone avant (10) sur des chaises de palier (11) reliées à la carrosserie du véhicule,
les chaises de palier (11) pouvant être déplacées pour augmenter l'ouverture de passage qu'offre au toit (2) la partie de couvercle (4) quand elle est ouverte,
**caractérisé en ce que**
les chaises de palier (11) sont associées à des parties latérales de la carrosserie et peuvent se déplacer chacune latéralement.

2. Véhicule convertible selon la revendication 1,
**caractérisé en ce que**
les chaises de palier (11) sont montées en pouvant basculer sur des axes de basculement (12) parallèles à l'axe longitudinal (18) du véhicule.

3. Véhicule convertible selon l'une des revendications 1 ou 2,
**caractérisé en ce que**
la partie de couvercle (4), selon une autre possibilité de mouvement, peut se déplacer dans un sens ou dans le sens opposé pour ouvrir ou fermer une ouverture d'accueil de bagages, proche de la zone d'extrémité arrière (9).

4. Véhicule convertible selon la revendication 3,
**caractérisé en ce que**
les chaises de palier (11), quand la partie de couvercle (4) est fermée, constituent un appui pour une articulation multiple (20), qui permet à la partie de couvercle (4) de basculer pour libérer l'ouverture d'accueil de bagages proche de la zone d'extrémité arrière (9) de cette partie.0
